# EUROPÄISCHE PATENTANMELDUNG

(11) **EP 2 899 435 A1**
(43) Veröffentlichungstag der Anmeldung: **29.07.2015**
(21) Anmeldenummer: 14195808.2
(22) Anmeldetag: 02.12.2014
(51) Int. Cl.: F16J 15/32, A46B 3/16

(54) **Bürstendichtung mit Bürstenfasern aus nichtmetallischen Werkstoffen**

(30) Priorität: 14.01.2014 DE 102014200525
(71) Anmelder: MTU Aero Engines AG, 80995 München (DE)
(72) Erfinder: Beichl, Stefan, 82211 Herrsching (DE); Gail, Alfons, verstorben (DE)

(57) **Zusammenfassung**

Bürstendichtung und Verfahren zu ihrer Herstellung, bestehend aus um ein Kernelement (14) bündelweise geschlungenen dicht nebeneinander liegenden Faserbündeln, deren freien Faserenden (Faserbereich 16) in einem von 90° abweichenden Legewinkel (α) zum Kernelement (14) angeordnet und mittels diese teilweise umfassende Klemmelemente (18, 21, 23) dauerhaft gehalten sind.

## Beschreibung

Die Erfindung betrifft ein Verfahren zur Herstellung von Bürstendichtungen mit Bürstenfasern aus nichtmetallischen Werkstoffen sowie Bürstendichtungen nach diesem Verfahren.

Als Berührungsdichtungen zwischen relativ zueinander bewegten Teilen, die an einem Schleifen, gelangen für besondere Anwendungsfälle sogenannte Bürstendichtungen zum Einsatz, deren Dichtflächen von den Stirn- und/oder Seitenflächen dicht aneinander gereihter in der Regel von einer Metalleinfassung gehaltener Faserbündel gebildet sind.

Hierbei hat es sich als vorteilhaft erwiesen, wenn die parallel zueinander liegenden aus der Metalleinfassung ragenden Bürstenfasern schräg zu dieser und nicht rechtwinklig dazu angeordnet sind, also einen sogenannten Legewinkel aufweisen.

Dieser Legewinkel wird bei Verwendung von Bürstenfasern aus Metall durch Glühen der Bürstenfasern nach deren Legen dauerhaft fixiert. Ein solches Verfahren ist zeit- und kostenaufwendig, da besondere Vorrichtungen für das Glühen in einem Vakuumofen notwendig sind.

Für viele Anwendungszwecke werden jedoch nichtmetallische Bürstenfasern benötigt, bei denen eine Fixierung eines gewünschten Legewinkels durch Glühen nicht durchführbar ist.

Aufgabe der Erfindung ist es, hier Abhilfe zu schaffen durch ein neues wohlfeiles Verfahren zur Herstellung von geradlinig oder gekrümmt sich erstreckenden Bürstendichtungen mit Bürstenfasern aus nichtmetallischen Werkstoffen sowie von Bürstendichtungen hergestellt nach diesem Verfahren.

Diese Aufgabe ist für das Verfahren gemäß dem Patentanspruch 1 sowie für die Bürstendichtungen gemäß den Merkmalen nach dem Patentanspruch 4 gelöst.

Weitere Merkmale der Erfindung ergeben sich aus den Unteransprüchen.

Durch die erfindungsgemäßen Maßnahmen kann auch bei Bürstendichtungen mit nichtmetallischen Bürstenfasern ein geforderter Legewinkel erzeugt und dauerhaft fixiert werden, was zu dem einfacher und kostengünstiger als bisher durchführbar ist. Hierbei können nichtmetallische Werkstoffe sowohl für die Bürstenfasern als auch für die Kern- und Klemmelemente verwendet werden. Es können aber auch die Klemmelemente aus metallischen Werkstoffen gefertigt sein, entscheidend ist nur das ausreichend hohe Klemmkräfte für die Bürstenfaser dauerhaft erzeugbar sind. Die Querschnitte der Klemmelemente sind frei wählbar, diese können also kreisförmige oder rechteckförmige Konfigurationen aufweisen. Auch können die Bürstendichtungen geradlinig oder gekrümmt oder aber auch kreisförmig ausgebildet sein.

Die Erfindung ist nachfolgend anhand mehrerer in der Zeichnung mehr oder minder schematisch dargestellter Ausführungsbeispiele beschrieben.

Es zeigen:
- Fig. 1: einen Ausschnitt einer teilweise im Schnitt dargestellten Draufsicht einer geradlinig sich erstreckenden Bürstendichtung gemäß einem ersten Ausführungsbeispiel der Erfindung,
- Fig. 2: einen Schnitt gemäß der Linie 11-11 in Fig. 2,
- Fig. 3: eine Ausschnitt einer teilweise im Schnitt dargestellten Draufsicht einer zweiten Ausführungsform einer geradlinig sich erstreckenden Bürstendichtung nach der Erfindung,
- Fig. 4: einen Schnitt gemäß der Linie IV-IV in Fig. 3,
- Fig. 5: einen Ausschnitt einer teilweise im Schnitt dargestellten Draufsicht einer gekrümmt sich erstreckenden Bürstendichtung nach einem dritten Ausführungsbeispiel der Erfindung und
- Fig. 6: eine Draufsicht auf eine ringförmige Ausführungsform einer Bürstendichtung gemäß der Erfindung.

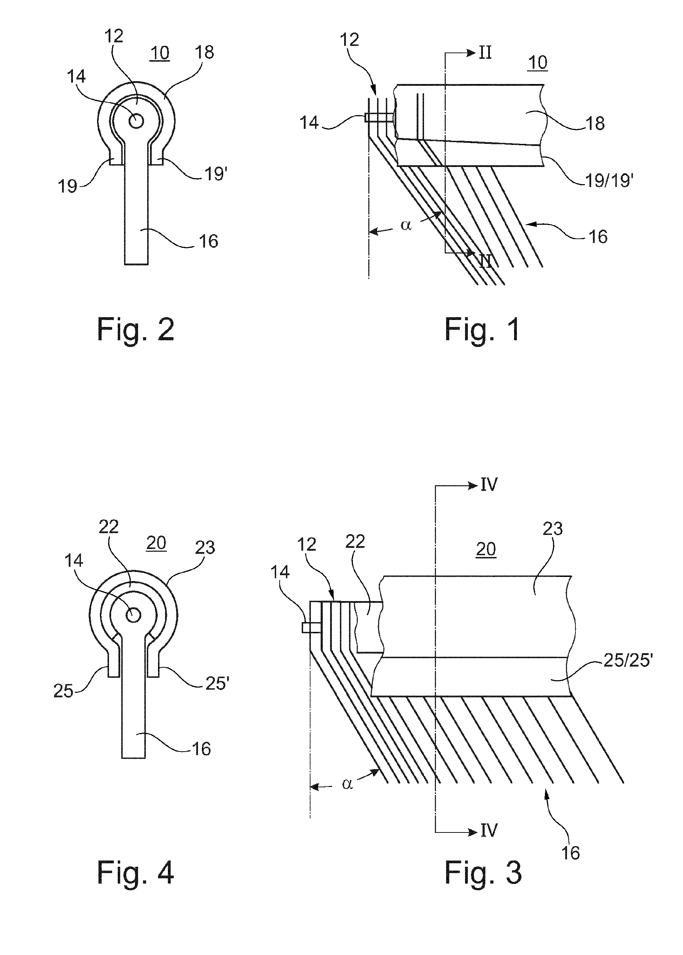

Eine geradlinig sich erstreckende in Fig. 1 nur teilweise dargestellt und insgesamt mit der Bezugsziffer 10 bezeichnete Bürstendichtung umfasst bündelweise zusammengefasste eng aneinander liegende Bürstenfasern 12 aus nichtmetallischem Werkstoff, vorzugsweise aus KEVLAR 49, die um ein ebenfalls geradlinig sich erstreckendes Kernelement 14 von etwa kreisförmigem Querschnitt eng geschlungen sind und sich mit ihrem im wesentlichen parallel zueinander liegenden freien Enden 16 vom Kernelement 14 weg erstrecken; vgl. Fig. 2. Hierbei sind die freien Enden 16 der Bürstenfasern - wie in Fig. 1 dargestellt - um einen Legewinkel α von etwa 45° gegenüber dem Kernelement 14 abgebogen, was nach Umschlingen des Kernelementes durchgeführt wird. Die Bürstenfasern werden in dieser abgebogenen Lage mittels eines im Anschluss an das Abbiegen aufgebrachten Klemmelementes 18 dauerhaft gehalten.

Das Klemmelement 18 umfasst dabei den um das Kernelement 14 geschlungenen Teil des Bürstenfaserbündels und bildet mit seinen Endbereichen sogenannte Bördelkanten 19, 19', die sich an dem Übergang von der Umschlingung in den freien Endbereich an die Bürstenfasern flächig dicht anschmiegen und somit die um den Legewinkel α abgebogenen freien Enden 16 der Bürstenfasern in der dargestellten abgebogenen Lage formschlüssig dauerhaft fixieren.

In den Fig. 3 und 4 ist ein weiteres insgesamt mit der Bezugsziffer 20 bezeichnetes Ausführungsbeispiel einer Bürstendichtung teilweise dargestellt. Hierbei tragen gleiche dem ersten Ausführungsbeispiel entsprechende Bauteile gleiche Bezugsziffern. Unterschiedlich ist lediglich die Art der Klemmung, die nunmehr mittels zweier Klemmelemente 22 und 23 erfolgt. Durch das Zwischenfügen des ersten Klemmelementes 22 ist für das zweite Klemmelement 23 ein größerer Umfang, d.h. ein größerer Durchmesser erzielbar, was zu größeren Klemmkräften an den Bördelkanten 25, 25' führt, die den Bördelkanten 19, 19' entsprechend dem Klemmelement 18 entsprechen und sich ebenfalls an dem Übergang von der Umschlingung in den freien Endbereich an die Bürstenfasern flächig dicht anschmiegen.

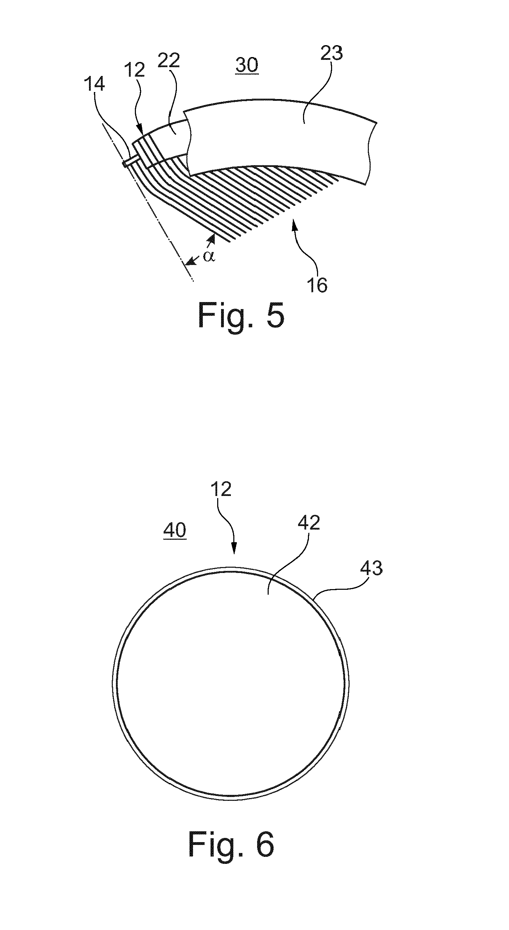

In Fig. 5 ist ein drittes Ausführungsbeispiel einer Bürstendichtung 30 in gekrümmter Ausbildung dargestellt, dessen Bauteile im wesentlichen den bereits beschriebenen Bauteilen entsprechen und die daher die gleichen Bezugsziffern tragen.

In Fig. 6 ist eine ringförmige Bürstendichtung 40 gezeigt, mit relativ geringem Durchmesser. Auch dort sind gleiche Bauteile mit gleichen Bezugsziffern bezeichnet mit der Maßgabe, dass ein ringförmiges Kernelement 42 und ein ringförmiger Klemmring 43 vorgesehen sind. Der Klemmring 43 wird nach dem Überführen der freien Enden 16 der Bürstenfasern 12 in die abgewinkelten den Legewinkel α einschließende Lage aufgeklemmt.

Das Überführen der Bürstenfasern 12 in die abgewinkelte Lage erfolgt in der Weise, dass das Kernelement 42 nach dem Umschlingen mit den zugeordneten Faserbündeln 12 auf ein Dorn entsprechendem Durchmesser aufgesteckt, die Faserenden 16 durch Drehen des Dornes abgebogen und daraufhin der Klemmring 43 aufgebracht wird, der die um den Legewinkel α abgebogenen Fasern dauerhaft fixiert.

Die Kernelemente 14 und 42 sind vorzugsweise ebenfalls aus nichtmetallischen Werkstoffen gefertigt, während für die Klemmelemente 18, 22, 23 und 43 auch metallische Werkstoffe, wie z.B. Messing, verwendet werden können.

## Patentansprüche

1. Verfahren zur Herstellung einer geradlinig oder gekrümmt sich erstreckenden Bürstendichtung mit Bürstenfasern aus nichtmetallischen Werkstoffen, deren Bürstenfasern bündelweise mit im wesentlichen parallel zueinander liegenden Fasern um ein Kernelement dicht nebeneinander liegend gelegt und die sich an die mehr als 180° betragende Umschlingung des Kernelementes anschließenden freien Faserenden in bezug auf das Kernelement um einen von 90° abweichenden Legewinkel überführt und in dieser Lage dauerhaft festgelegt werden.

2. Verfahren nach Anspruch 1, **dadurch gekennzeichnet, dass** das Festlegen durch mechanisches Kämmen erfolgt.

3. Verfahren nach den Ansprüchen 1 und 2, **dadurch gekennzeichnet, dass** vor Erzeugen des gewünschten Legewinkels ein die dicht aneinander gereihten Faserbündel tragendes ringförmiges Kernelement auf einen im Durchmesser etwa gleichen Dorn aufgebracht, die freien Enden durch Drehen des Dornes in den gewünschten Legewinkel überführt und durch anschließendes Aufbringen eines korrespondierenden Klemmringes in ihrer abgewinkelten Lage dauerhaft fixiert werden.

4. Nach dem Verfahren gemäß der Patentansprüche 1 und 2 hergestellte Bürstendichtung, **dadurch gekennzeichnet, dass** auf einem Kernelement (14) Bürstenfasern (12) bündelweise dicht nebeneinander liegend angeordnet sind, deren im wesentlichen parallel zueinander liegenden freien Fasern (Faserbereich 16) in Bezug auf das Kernelement (14) einen von 90° abweichenden Legewinkel (α) aufweisen und dass über ein das Kernelement (14) und die dieses umschließenden Bürstenfasern (12) teilweise umfassendes Klemmelement (18) in dieser Lage dauerhaft gehalten sind.

5. Bürstendichtung nach Anspruch 4, **dadurch gekennzeichnet, dass** dem Klemmelement (18) ein zusätzliches Klemmelement (23) zugeordnet ist., dessen freien Bördelkanten (19, 19') an den

6. Bürstendichtung nach Anspruch 4 oder 5, **dadurch gekennzeichnet, dass** die Klemmelemente (18, 23) Bördelkanten (19, 19', 25, 25') aufweisen, die an den um den Legewinkel (α) abgebogenen freien Enden (Faserbereich 16) der Bürstenfasern (12) flächig anliegend diese in ihrer Lage dauerhaft halten.

7. Bürstendichtung nach den Ansprüchen 4 bis 6, **dadurch gekennzeichnet, dass** die Klemmelemente (18, 23) in den der Umschlingung des Kernelementes (14) sich anschließenden Bereichen parallel zu den freien Faserbündeln liegende Endbereiche (Bördelkanten 19, 19', 25, 25') übergehen.

8. Bürstendichtung nach den Ansprüchen 4 bis 6, **dadurch gekennzeichnet, dass** das Kernelement (14) geradlinig oder gekrümmt ausgebildet ist.

9. Bürstendichtung nach den Ansprüchen 4 bis 8, **dadurch gekennzeichnet, dass** das Kernelement ein Kreisring (42) ist und als Klemmelement ein das Kernelement umfassender Klemmring (43) verwendet ist.

10. Bürstendichtung nach einem oder mehreren der vorhergehenden Ansprüche, **dadurch gekennzeichnet, dass** der Legewinkel (α) der freien Enden (16) der Bürstenfasern (12) 45° beträgt.
